Europäisches Patentamt

European Patent Office

Office européen des brevets

(19)

(11) **EP 1 360 524 B1**

(12) **FASCICULE DE BREVET EUROPEEN**

(45) Date de publication et mention
de la délivrance du brevet:
**22.12.2004 Bulletin 2004/52**

(51) Int Cl.$^7$: **G01V 1/38**

(21) Numéro de dépôt: **02706861.8**

(22) Date de dépôt: **15.02.2002**

(86) Numéro de dépôt international:
**PCT/FR2002/000587**

(87) Numéro de publication internationale:
**WO 2002/065156 (22.08.2002 Gazette 2002/34)**

(54) **PROCEDE DE DETERMINATION DU COURANT MARIN ET DISPOSITIF ASSOCIE**

VERFAHREN ZUR BESTIMMUNG VON MEERESSTRÖMUNGEN UND ZUGEHÖRIGE
VORRICHTUNG

METHOD FOR DETERMINING OCEAN CURRENT AND ASSOCIATED DEVICE

(84) Etats contractants désignés:
**AT BE CH CY DE DK ES FI FR GB GR IE IT LI LU
MC NL PT SE TR**

(30) Priorité: **15.02.2001 FR 0102061**

(43) Date de publication de la demande:
**12.11.2003 Bulletin 2003/46**

(73) Titulaire: **CGG Marine
91341 Massy (FR)**

(72) Inventeur: **BRUNET, Philippe
F-91440 Bures-sur-Yvette (FR)**

(74) Mandataire: **Callon de Lamarck, Jean-Robert et al
Cabinet Régimbeau
20, rue de Chazelles
75847 Paris cedex 17 (FR)**

(56) Documents cités:
**EP-A- 1 031 855        WO-A-00/20895
US-A- 4 068 208**

**Description**

La présente invention concerne de manière générale les opérations d'acquisition en mer de données géophysiques par des mesures sismiques sous-marines.

Plus précisément, l'invention concerne une méthode originale de détermination du courant marin, par des moyens embarqués sur un navire d'acquisition de données. L'invention concerne également un dispositif pour la mise en oeuvre d'un tel procédé.

Un système et une méthode se rapportant à l'acquisition de données marines et à l'utilisation de données de courant marin sont décrits dans le document WO-A-0 020 895.

Il est nécessaire, pour mener à bien les opérations d'acquisition de données géophysiques en mer, de disposer de mesures de courant marin. Ces mesures permettent de prendre en compte l'effet du courant sur le navire, et sur les dispositifs remorqués (en particulier, hydrophones intégrés dans des câbles appelés « streamers » selon la terminologie anglo-saxonne répandue).

Pour mesurer le courant, il est connu de déployer in situ des moyens d'acquisition tels que des bouées courantométriques.

Mais une telle solution n'est guère satisfaisante dans la mesure où elle est particulièrement lourde et coûteuse à mettre en oeuvre.

Il est également possible de mesurer de manière relativement simple le courant longitudinal relatif par rapport au bateau, grâce à un loch embarqué. Mais un tel loch ne fournit qu'une mesure unidirectionnelle, relative au navire.

Une autre solution embarquée pour mesurer le courant consiste à exploiter les mesures d'un profileur de coque du type Acoustic Doppler Current Profileur (ADCP) selon la terminologie anglo-saxonne répandue.

Un tel profileur comprend des moyens pour émettre selon plusieurs directions des faisceaux acoustiques dans l'eau, les moyens d'émission étant fixés sous la coque du navire, et des moyens de réception et d'analyse des signaux réfléchis par les particules d'eau.

En fonction des variations de fréquence observées pour les différents signaux reçus, il est possible de déterminer le courant à différentes profondeurs.

Le profiteur de coque permet ainsi de déterminer un courant d'écoulement par rapport au navire, auquel on retranche ensuite le vecteur d'avance du navire pour obtenir le courant absolu.

Mais plusieurs inconvénients sont associés à un profiler de coque tel qu'envisagé ci-dessus.

Un premier inconvénient est qu'il est nécessaire de procéder à un réglage très fin (de l'ordre du 1/10$^{éme}$ de degré) de l'orientation du dispositif par rapport au navire, afin d'éviter les biais sur les vecteurs courant mesurés.

Un deuxième inconvénient des profiteurs de coques est que ces dispositifs génèrent des erreurs de mesure lorsque le navire est en virage.

Un troisième inconvénient des profiteurs est lié au phénomène de « ringing ». Ce phénomène correspond à une réverbération des ondes émises sur des éléments de coque du navire, l'ADCP étant souvent monté dans une structure liée à la coque, telle qu'un puits de la coque du navire.

Une telle réverbération produit des ondes réfléchies qui sont reçues par le dispositif comme des ondes représentatives d'un courant relatif nul (car ayant la même fréquence que les ondes émises). Cette perturbation peut avoir un effet notable sur les mesures effectuées à des profondeurs faibles.

Et cet inconvénient peut être particulièrement pénalisant dans le contexte d'acquisition de mesures sismiques en mer, dans la mesure où pour des navires à fort tirant d'eau, les « faibles profondeurs » par rapport au dispositif fixé sous la coque correspondent sensiblement à la profondeur d'immersion des streamers, de sorte que la mesure de courant à ces profondeurs n'est pas fiable.

Le but de l'invention est de permettre de réaliser des mesures de courant en s'affranchissant des inconvénients cités ci-dessus.

Afin d'atteindre ce but l'invention propose selon un premier aspect un procédé de détermination de courant marin mettant en oeuvre des moyens embarqués d'acquisition de données géophysiques sur un navire, ledit navire remorquant au moins un streamer muni de moyens de mesure de traction et de moyens de mesure de positionnement, caractérisé en ce que le procédé comprend les étapes consistant à :

- recueillir les mesures desdits moyens de mesure de traction,
- recueillir les mesures desdits moyens de mesure de positionnement,
- calculer de manière itérative un vecteur courant représentatif du courant réel en réitérant les opérations suivantes selon un pas de temps d'échantillonnage donné :

  ✓ calculer pour une pluralité de vecteurs courant d'entrée de simulation des données simulées de traction et de positionnement de streamer,
  ✓ déterminer ledit vecteur courant représentatif du courant réel par comparaison des valeurs mesurées et simulées pour les différents vecteurs courant d'entrée de simulation.

Des aspects préférés, mais non limitatifs du procédé selon l'invention sont les suivants :

- la détermination dudit vecteur courant représentatif du courant réel met en oeuvre les opérations suivantes pour chaque pas de temps d'échantillonnage :

  ✔ définir pour chaque vecteur courant d'entrée de simulation des écarts de traction et de positionnement entre les données simulées à des mesures réelles effectuées par lesdits moyens de mesure,
  ✔ déterminer ledit vecteur courant représentatif du courant réel par analyse desdits écarts de traction et de positionnement,

- le calcul du vecteur courant représentatif du courant réel comprend la détermination pour chaque vecteur courant d'entrée de simulation d'un écart relatif de traction, et d'un écart relatif de positionnement,
- la détermination du vecteur courant résulte de la minimisation d'une fonction des coordonnées du vecteur courant,
- pour calculer le vecteur courant représentatif du courant réel, on minimise une fonction de la forme générale :

$$f(\theta, v) = \frac{1}{T} \int_T \beta.(\text{écart.relatif.de.positionnement}) + (1 - \beta).(\text{écart.relatif.de.traction})$$

, $\beta$ étant un coefficient pondérateur,
- la fonction à minimiser est une fonction convexe,
- la minimisation de ladite fonction est opérée par une méthode du gradient,
- la fonction à minimiser est de la forme :
-

$$F(Vx, Vy) = \frac{K1}{L.(T1 - T0)} \quad x \quad \int_{T0}^{T1}\int_{0}^{L} \left| Fmes(s, t) - Fsim(Vx, Vy, s, t) \right| \quad dsdt$$

$$+ \frac{K2}{L.(T1 - T0)} \quad x \quad \int_{T0}^{T1}\int_{0}^{L} \sqrt{(Xmes(s,t) - Xsim(Vx,Vy,s,t))^2 + (Ymes(s,t) - Ysim(Vx,Vy,s,t))^2} \quad dsdt$$

avec les notations suivantes :

Vx,Vy = composantes du courant à déterminer,
Xmes(s,t), Ymes(s,t) = coordonnées du point d'abscisse curviligne s du streamer mesuré à l'instant t,
Xsim(Vx,Vy,s,t), Ysim(Vx,Vy,s,t) = coordonnées du point d'abscisse curviligne s du streamer simulé à l'instant t,
Fmes(s,t) = force de traction mesurée à l'abscisse curviligne s et à l'instant t,
Fsim(Vx,Vy,s,t) = force de traction à l'abscisse curviligne s et à l'instant t,
T0, T1 = instants respectifs de début et de fin de simulation,
L = longueur de streamer,
K1,K2 = coefficients pondérateurs,

- lors du premier calcul de données simulées de positionnement et de traction de streamer, le vecteur courant d'entrée est le vecteur courant qui, pour l'intervalle de temps précédent, a fourni la simulation de déformée et de traction de streamer la plus proche de la déformée et de la traction mesurées,
- ledit pas de temps d'échantillonnage est choisi, de manière à être suffisamment long pour couvrir plusieurs acquisitions de mesures de traction et de positionnement par lesdits moyens de mesure,
- la durée dudit pas de temps d'échantillonnage est de l'ordre de quelques minutes,
- pour chaque streamer muni de moyens de mesure de traction, une mesure de traction est effectuée en tête de streamer,
- les données simulées de positionnement et de traction de streamer sont obtenues par un algorithme instationnaire de couplage hydrodynamique,
- ledit algorithme modélise chaque streamer par plusieurs tronçons lorsque le navire se déplace selon une trajectoire sensiblement rectiligne, et par un nombre supérieur de segments lorsque le navire est en virage,

- ledit nombre supérieur de segments est de l'ordre de quinze,

Selon un deuxième aspect, l'invention propose également un dispositif pour la mise en oeuvre du procédé selon l'une des revendications précédentes, caractérisé en ce qu'il comporte les moyens d'acquisition de traction de streamer, des moyens d'acquisition de positionnement de streamer, et des moyens de traitement permettant la mise en oeuvre d'un algorithme pour déterminer à chaque pas de temps d'échantillonnage un vecteur courant représentatif du courant réel.

D'autres aspects, buts et avantages de l'invention apparaîtront mieux à la lecture de la description suivante sur lesquels :

- les figures 1a et 1b sont deux représentations schématiques d'un navire remorquant un ensemble de streamers,
- la figure 2 illustre le principe de mise en oeuvre de l'invention, qui . exploite les écarts entre valeurs mesurées et simulées de positionnement et de traction de streamer,
- la figure 3 est une représentation schématique d'un navire remorquant un ensemble de streamers, plus détaillées que la représentation des figures 1a et 1b,
- les figures 4a à 4c sont des graphes illustrant l'influence de la modélisation des streamers dans la mise en oeuvre de l'invention,
- la figure 5 est une représentation schématique d'un dispositif de mise en oeuvre de l'invention.

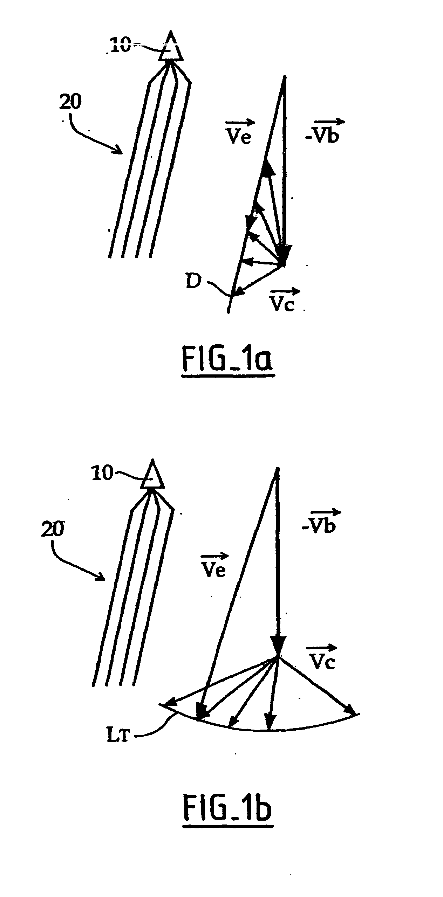

Les figures 1a et 1b représentent de manière très schématique un navire 10 qui remorque un ensemble 20 de streamers.

Dans l'exemple schématisé des figures 1a et 1b, l'ensemble 20 comprend quatre streamers ; toutefois cette représentation n'est nullement limitative, l'invention pouvant être mise en oeuvre avec un dispositif remorqué comportant un nombre quelconque de streamers.

A côté du navire et de son ensemble de streamers remorqués, on a représenté sur les figures 1a et 1b :

- le vecteur $-\overrightarrow{Vb}$, qui est l'opposé du vecteur d'avance du bateau par rapport au fond, ce vecteur d'avance pouvant être déterminé par des mesures de type GPS par exemple,
- ainsi qu'une pluralité de vecteurs $\overrightarrow{Vc}$ , chaque vecteur $\overrightarrow{Vc}$ étant un vecteur courant possible représentatif d'une valeur du courant marin par rapport au fond,
- enfin, un vecteur $\overrightarrow{Ve}$ représentant l'écoulement de l'eau par rapport au navire et aux streamers est également représenté ; ce vecteur correspond à la somme des vecteurs $-\overrightarrow{Vb}$ et d'un des vecteurs courants $\overrightarrow{Vc}$.

On comprend que, partant du cas simple d'un streamer rectiligne, il existe une infinité de vecteurs écoulements (c'est-à-dire de vecteurs $\overrightarrow{Ve}$), parallèles entre eux, conférant au streamer une orientation donnée, c'est-à-dire à un positionnement donné de chaque point du streamer.

Ceci est illustré sur la figure 1 a, sur laquelle on a représenté une pluralité de vecteurs courants $\overrightarrow{Vc}$ dont chacun, une fois additionné avec le vecteur $-\overrightarrow{Vb}$ pour donner un vecteur $\overrightarrow{Ve}$ d'écoulement de l'eau par rapport au navire et aux streamers, aboutit à un vecteur d'écoulement $\overrightarrow{Ve}$ selon la même direction D donnée.

De manière similaire, la figure 1b fait apparaître qu'il existe également une infinité de vecteurs courants $\overrightarrow{Vc}$ différents qui, une fois additionnés avec un vecteur $-\overrightarrow{Vb}$ donné, aboutissent à des vecteurs d'écoulements $\overrightarrow{Ve}$ ayant le même module. Ces vecteurs $\overrightarrow{Ve}$ de même module décrivent ainsi la ligne $L_T$ représentée sur la figure 1b.

Et des vecteurs $\overrightarrow{Ve}$ ayant le même module correspondant à une même traction appliquée par le courant au streamer.

On comprend par ailleurs que, partant d'une orientation et d'une traction données associées à un streamer (ou élément de streamer comme on va le détailler ci-dessous), il existe un vecteur courant $\overrightarrow{Vc}$ unique dont l'effet sur le streamer/élément de streamer se traduit par l'orientation et la traction données.

Dans le cas d'un navire d'acquisition de mesures sismiques remorquant au moins un streamer pour lequel on dispose de mesures de positionnement de streamer et de mesures de traction de streamer, l'invention propose d'exploiter les principes exposés ci-dessus pour déterminer de manière récurrente un vecteur courant représentatif du courant réel.

Plus précisément, comme on va l'expliquer l'invention permet de déterminer un tel vecteur en simulant de manière récurrente selon un pas de temps d'échantillonnage, qui est le pas de temps principal de mise en oeuvre de l'invention, pour différentes valeurs de courant d'entrée, le positionnement et la traction d'un ou plusieurs streamer(s), puis en déterminant pour chaque pas de temps d'échantillonnage celui parmi les courants d'entrée qui permet d'approcher au mieux des mesures réelles de positionnement et de traction effectuées pour le(s) streamer(s) considéré(s).

Ces étapes peuvent ensuite être réitérées selon le pas de temps d'échantillonnage ledit pas de temps d'échantillonnage devant être :

- assez important pour recouvrir plusieurs acquisitions de mesures réelles de positionnement et de traction.
- et assez bref pour que l'hypothèse d'un courant stationnaire à l'intérieur de chacun de ces pas de temps d'échantillonnage soit compatible avec la courantométrie réelle. En effet, la simulation du positionnement et de la traction de streamer effectuée à partir des vecteurs courant d'entrée repose sur une hypothèse de courant stationnaire à l'intérieur d'un pas de temps d'échantillonnage.

Pour initier le fonctionnement des étapes mentionnées ci-dessus, et permettre l'itération du calcul d'un vecteur courant permettant de restituer en simulation au plus près le positionnement et la traction des streamers, il est par ailleurs nécessaire de fournir en entrée de simulation un vecteur courant d'entrée initial. On reviendra sur cet aspect.

Afin de déterminer le vecteur courant d'entrée qui permet d'approcher au mieux, par le biais d'une simulation, les mesures réelles de positionnement, on calcule pour chaque pas de temps d'échantillonnage les valeurs possibles de l'écart relatif entre :

- la traction mesurée pour un streamer remorqué dans un milieu marin parcouru par un courant réel,
- et la traction simulée, et ce pour différentes valeurs du vecteur courant d'entrée de simulation (qui est dans le cas présent déterminé de manière bidimensionnelle par son module v et son orientation θ dans le plan - toutefois on pourra également mettre en oeuvre l'invention pour le calcul d'un courant tridimensionnel).

On note Tmesurée(t) la traction mesurée par un capteur de traction positionné sur un streamer (de préférence en tête de streamer), et Tsimulée(t), la traction simulée au même point du streamer.

Et on calcule de même les valeurs possibles de l'écart relatif de positionnement, par analyse des écarts entre positionnement simulé d'un ou plusieurs points déterminés du streamer, et positionnement mesuré par le dispositif de mesure du positionnement en des points correspondants du streamer réel.

La fonction à minimiser pour chaque pas de temps d'échantillonnage est donc de la forme générale :

$$f(\theta, v) = \frac{1}{T} \int_T \beta.(\text{écart.relatif.de.positionnement}) + (1 - \beta).(\text{écart.relatif.de.traction}) \,,$$

T correspondant à la durée du pas de temps d'échantillonnage.

β est un coefficient pondérateur dont la valeur peut être adaptée de manière à privilégier le relevé des écarts de traction, ou de positionnement.

Dans une représentation de courant V par des coordonnées (Vx. Vy). la fonction à minimiser pour obtenir une mesure de courant sur la période de courant [T0, T1] est une forme discrétisée de :

$$F(Vx, Vy) = \frac{K1}{L.(T1 - T0)} \times \int_{T0}^{T1}\int_0^L |Fmes(s,t) - Fsim(Vx, Vy, s, t)| \; dsdt$$

$$+ \frac{K2}{L.(T1 - T0)} \times \int_{T0}^{T1}\int_0^L \sqrt{(Xmes(s,t) - Xsim(Vx, Vy, s, t))^2 + (Ymes(s,t) - Ysim(Vx, Vy, s, t))^2} \; dsdt \,,$$

où K1 et K2 sont des coefficients pondérateurs, qui définissent l'importance relative entre les écarts de positionnement et les écarts de traction. Par exemple, si on donne à K1 et K2 les valeurs respectives 1/500 et 1/10, cela revient à dire qu'un écart de traction de 500 N est aussi pénalisant qu'un écart de positionnement de 10 m.

Dans l'expression de la fonction F(Vx, Vy) à minimiser exposée ci-dessus on adopte les notations suivantes :

Xmes(s,t), Ymes(s,t) = coordonnées du point d'abscisse curviligne s du streamer mesuré à l'instant t,
Xsim(Vx,Vy,s,t), Ysim(Vx,Vy,s,t) = coordonnées du point d'abscisse curviligne s du streamer simulé à l'instant t, la simulation prenant en compte un courant de composantes Vx, Vy,
Fmes(s,t) = force de traction mesurée à l'abscisse curviligne s et à l'instant t,
Fsim(Vx,Vy,s,t) = force de traction à l'abscisse curviligne s et à l'instant t pour le streamer simulé avec un courant de composantes Vx, Vy,
T0, T1 = instants respectifs de début et-de fin de période de courant (pas de temps d'échantillonnage)
L = longueur de streamer.

Une telle fonction F étant régulière et convexe, comme des calculs effectués par la Demanderesse l'ont démontré, ladite fonction F peut être minimisée de manière simple. Une méthode du gradient est particulièrement bien adaptée à cet effet.

On précise que pour obtenir une simulation de traction sur le streamer à partir d'un vecteur courant d'entrée on met en oeuvre un modèle de couplage hydrodynamique instationnaire entre le courant marin et le streamer.

On précise également qu'il est possible de mettre en oeuvre un tel modèle de couplage en modélisant le streamer sous la forme d'un élément rectiligne unique, ou encore sous la forme de plusieurs tronçons rigides articulés entre eux par des liaisons pivot parfaites, la traction étant alors calculée pour chaque tronçon et pouvant être déterminée par interpolation en tout point du streamer.

En tout état de cause, le modèle de couplage hydrodynamique en lui-même peut être un modèle connu en soi.

On précise enfin que pour représenter au mieux les streamers réellement remorqués, le modèle peut également prendre en compte une bouée de tête reliée à l'arrière de chaque streamer.

On utilise pour obtenir le positionnement du streamer le même modèle hydrodynamique instationnaire de couplage qu'évoqué ci-dessus pour les simulations de traction.

Et ici encore, le streamer peut être modélisé sous la forme d'un élément rectiligne unique, ou encore sous la forme d'un ensemble de tronçons articulés entre eux.

Dans ce dernier cas, il est possible de calculer le positionnement de chaque tronçon (ou de certains d'entre eux), une mesure de positionnement devant alors être associée à des sections correspondantes du streamer réel.

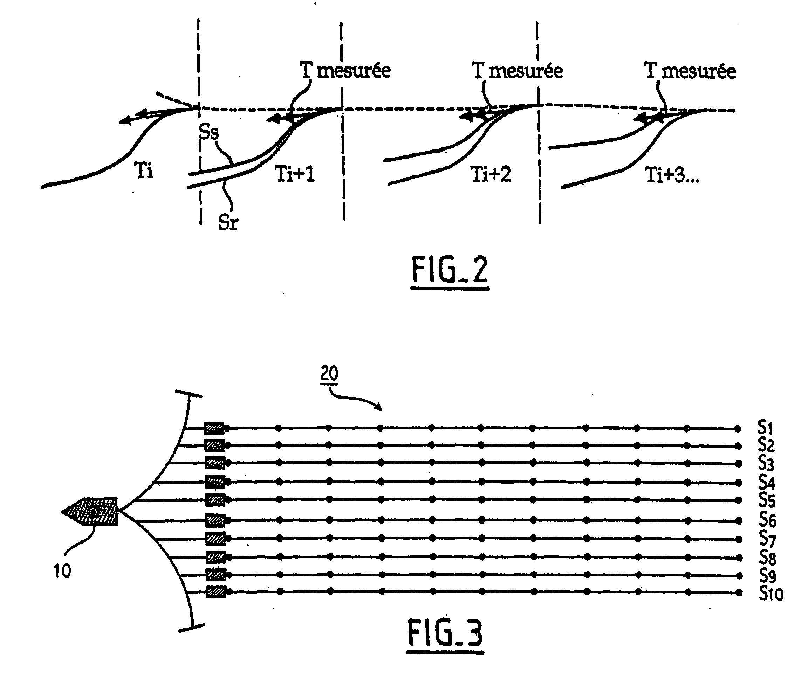

La figure 2 illustre le principe de mise en oeuvre de l'invention, qui à l'intérieur d'un intervalle de temps donné, constitué de plusieurs instants de mesure successifs Ti, Ti+1, Ti+2, Ti+3; ... exploite les écarts entre des valeurs associées à un streamer « réel » Sr sur le quel on effectue des mesures en un ou plusieurs point(s) déterminé(s), et des valeurs associées à un streamer « simulé » Ss.

A l'intérieur de chaque pas de temps de simulation, on minimise la fonction F pour chaque streamer que l'on a modélisé et pour lequel on dispose de mesures réelles.

Concernant les mesures réelles de traction et de positionnement, la figure 3 est une représentation schématique d'un navire 10 remorquant un ensemble 20 de streamer (ledit ensemble comportant sur cette représentation plus détaillée dix streamers S1 à S10).

Sur cette figure, chaque streamer est associé à un capteur de traction placé en tête de streamer et représenté sous la forme d'un rectangle, ainsi qu'à une pluralité de points de mesure de positionnement représentés sous la forme de points répartis le long du streamer. Chaque streamer est sur cette figure associé à onze points de mesure de positionnement, ce qui permet de modéliser le streamer par dix tronçons articulés.

Ces mesures de positionnement peuvent mettre en oeuvre des moyens connus, tels que des émetteurs/récepteurs acoustiques sous-marins haute fréquence, éventuellement associés à un compas, les émetteurs/récepteurs communiquant avec un système DGPS embarqué sur le navire ainsi qu'avec des dispositifs RGPS associés à des bouées attachées à différents points du dispositif remorqué.

On pourra, pour des raisons d'économie de temps de calcul, modéliser les streamers par un élément rectiligne rigide unique dans le cas d'un navire se déplaçant en ligne droite.

Toutefois, on obtiendra des résultats d'une plus grande précision en modélisant chaque streamer par une succession de tronçons articulés. En ligne droite, la Demanderesse a déterminé qu'il était satisfaisant de modéliser les streamers sous la forme de trois tronçons.

Lorsque le navire effectue des girations, on augmentera avec profit le nombre d'élément modélisant un streamer. Dans ce cas, il sera nécessaire d'adapter le nombre de capteurs associés au streamer réel.

La figure 3 représente ainsi onze points de mesure de positionnement répartis le long de chaque streamer, un capteur de traction étant en outre placé en tête de chaque streamer.

Dans le cas où les streamers sont modélisés par une succession d'éléments rigides articulés entre eux, il est également possible de pondérer différemment les mesures effectuées aux différentes sections de chaque streamer. On peut par exemple donner plus d'importance aux écarts en queue de streamer, celle-ci pouvant être plus sensible aux variations de courant.

En ce qui concerne la durée du pas de temps d'échantillonnage, la Demanderesse a déterminé que l'hypothèse de courant quasi stationnaire à l'intérieur d'un pas d'échantillonnage était satisfaite tant que ce dernier avait une valeur ne dépassant pas quelques minutes. A titre indicatif, des essais satisfaisants ont été réalisés avec des pas de temps d'échantillonnage de cinq minutes et de dix minutes. Une durée de l'ordre de quelques minutes est ainsi appropriée.

En ce qui concerne le nombre de tronçons modélisant chaque streamer, la modélisation d'un streamer d'une longueur de 5800 mètres dont un virage dans le rayon de giration est de 2500 mètres pourra être effectuée par une quinzaine de tronçons.

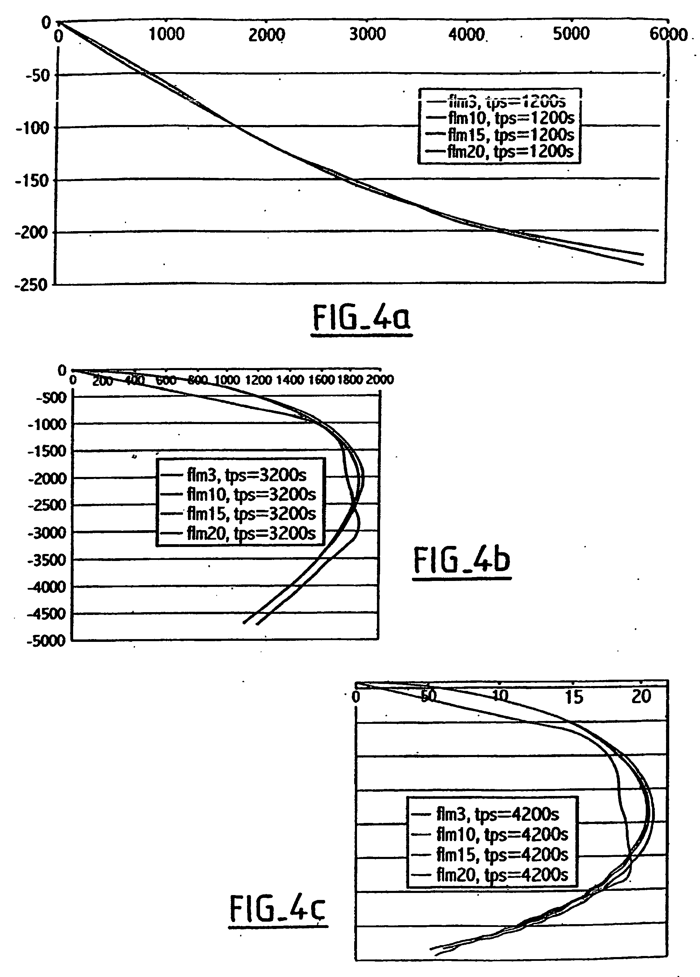

Les figures 4a à 4c illustrent l'influence du nombre d'élément modélisant un streamer sur les résultats de déformée. Sur la figure 4a, le positionnement du streamer à l'équilibre est représenté avant le virage, pour quatre types de modélisation du streamer :

- courbe Flm3 : trois tronçons
- courbe Flm10 : dix tronçons
- courbe Flm15 :quinze tronçons
- courbe Flm 20 : vingt tronçons

On observe que les écarts sont peu importants.

Les figures 4b et 4c montrent par contre qu'il est nécessaire de modéliser le streamer par un nombre important de tronçons pour obtenir une forme régulière, représentative de la géométrie du streamer réel en giration (la figure 4b correspond à une modélisation du streamer pendant le virage, et la figure 4c en sortie de virage).

On a dit qu'il était nécessaire pour la première itération du calcul du courant de fournir en entrée de simulation un vecteur courant initial.

Pour mettre en oeuvre l'invention, on fait l'hypothèse que le courant est constant à l'intérieur d'un pas de temps d'échantillonnage, on détermine ce vecteur courant initial de la manière suivante :

- lors du premier intervalle de temps pour lequel on veut déterminer le courant, on peut fournir à l'algorithme, comme premier vecteur courant, un courant arbitrairement nul. La fonction à minimiser étant convexe, la méthode du gradient converge vers le vecteur solution.
- afin d'optimiser le temps calcul, pour les intervalles de temps postérieurs, on initialise l'algorithme avec le vecteur courant déterminé lors de l'intervalle de temps précédent.

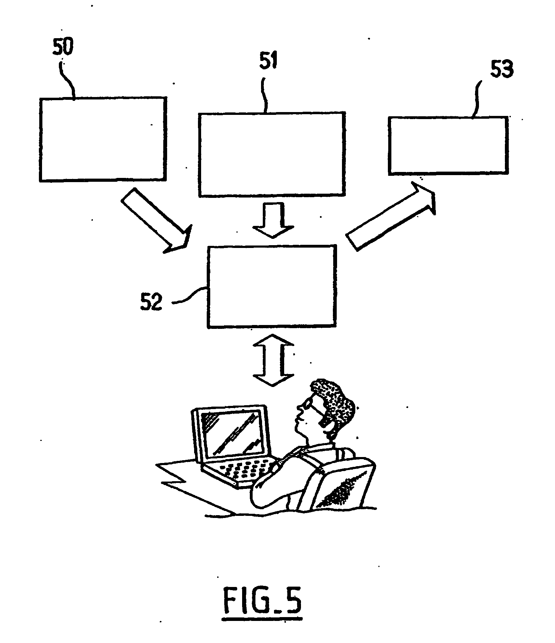

La figure 5 illustre de manière schématique un dispositif de mise en oeuvre de l'invention, qui comprend des moyens 50 de mesure de traction de streamer; des moyens 51 de mesure de positionnement en temps réel de streamer, les mesures des moyens 50 et 51 étant acheminées vers un ordinateur 52 embarqué sur le navire d'acquisition comprenant l'algorithme décrit ci-dessus et permettant de déterminer un courant simulé représentatif du courant réel.

Il est également possible de faire communiquer l'ordinateur 52 avec un ordinateur distant 53, ledit ordinateur distant pouvant être embarqué ou non. Les liaisons entre les différents éléments de ce dispositif peuvent être de tout type connu en soi, filaire ou non.

## Revendications

1. Procédé de détermination de courant marin mettant en oeuvre des moyens embarqués d'acquisition de données géophysiques sur un navire (10), ledit navire remorquant au moins un streamer (S1-S10) muni de moyens de mesure de traction (50) et de moyens de mesure de positionnement (51) **caractérisé en ce que** le procédé comprend les étapes consistant à :

   - recueillir les mesures desdits moyens de mesure de traction (50),
   - recueillir les mesures desdits moyens de mesure de positionnement (51),
   - calculer de manière itérative un vecteur courant représentatif du courant réel en réitérant les opérations suivantes selon un pas de temps d'échantillonnage donné :

      ✔ calculer pour une pluralité de vecteurs courant d'entrée de simulation des données simulées de traction et de positionnement de streamer,
      ✔ déterminer ledit vecteur courant représentatif du courant réel par comparaison des valeurs mesurées et simulées pour les différents vecteurs courant d'entrée de simulation.

2. Procédé selon la revendication précédente, **caractérisé en ce que** la détermination dudit vecteur courant représentatif du courant réel met en oeuvre les opérations suivantes pour chaque pas de temps d'échantillonnage:

      ✔ définir pour chaque vecteur courant d'entrée de simulation des écarts de traction et de positionnement entre les données simulées à des mesures réelles effectuées par lesdits moyens de mesure,
      ✔ déterminer ledit vecteur courant représentatif du courant réel par analyse desdits écarts de traction et de positionnement.

3. Procédé la revendication 1 ou 2, **caractérisé en ce que** l'étape de calcul du vecteur courant représentatif du courant réel comprend la détermination pour chaque vecteur courant d'entrée de simulation d'un écart relatif de traction, et d'un écart relatif de positionnement.

**4.** Procédé selon l'une des revendications précédentes, **caractérisé en ce que** la détermination du vecteur courant résulte de la minimisation d'une fonction des coordonnées du vecteur courant.

**5.** Procédé selon la revendication précédente, **caractérisé en ce que** pour calculer le vecteur courant représentatif du courant réel, on minimise une fonction de la forme générale :

$$f(\theta, v) = \frac{1}{T} \int_T \beta.(\text{écart relatif de positionnement}) + (1 - \beta).(\text{écart relatif de traction})$$

, $\beta$ étant un coefficient pondérateur, T étant la durée du pas de temps d'échantillonage V étant le module du vecteur courant et $\theta$ l'orientation dans le plan du vecteur courant.

**6.** Procédé selon la revendication précédente, **caractérisé en ce que** la fonction à minimiser est une fonction convexe.

**7.** Procédé selon la revendication précédente, **caractérisé en ce que** la minimisation de ladite fonction est opérée par une méthode du gradient.

**8.** Procédé selon l'une des revendications 4 à 7, **caractérisé en ce que** la fonction à minimiser est de la forme :

$$F(Vx, Vy) = \frac{K1}{L.(T1 - T0)} \quad x \quad \int_{T0}^{T1}\int_{0}^{L} \big| Fmes(s,t) - Fsim(Vx, Vy, s, t) \big| \quad dsdt$$

$$+ \frac{K2}{L.(T1 - T0)} \quad x \quad \int_{T0}^{T1}\int_{0}^{L} \sqrt{(Xmes(s,t) - Xsim(Vx, Vy, s, t))^2 + (Ymes(s,t) - Ysim(Vx, Vy, s, t)^2} \quad dsdt$$

avec les notations suivantes :

Vx,Vy = composantes du courant à déterminer,
Xmes(s,t), Ymes(s,t) = coordonnées du point d'abscisse curviligne s du streamer mesuré à l'instant t,
Xsim(Vx,Vy,s,t), Ysim(Vx,Vy,s,t) = coordonnées du point d'abscisse curviligne s du streamer simulé à l'instant t,
Fmes(s,t) = force de traction mesurée à l'abscisse curviligne s et à l'instant t,
Fsim(Vx,Vy,s,t) = force de traction à l'abscisse curviligne s et à l'instant t,
T0, T1 = instants respectifs de début et de fin de simulation,
L = longueur de streamer,
K1,K2 = coefficients pondérateurs.

**9.** Procédé selon l'une des revendications précédentes, **caractérisé en ce que** lors du premier calcul de données simulées de positionnement et de traction de streamer, le vecteur courant d'entrée est le vecteur courant qui, pour un intervalle de temps donné l'intervalle de temps précédent, a fourni la simulation de déformée et de traction de streamer la plus proche de la déformée et de la traction mesurées lors d'une simulation préalable de déformée.

**10.** Procédé selon l'une des revendications précédentes, **caractérisé en ce que** ledit pas de temps d'échantillonnage est choisi, de manière à être suffisamment long pour couvrir plusieurs acquisitions de mesures de traction et de positionnement par lesdits moyens de mesure.

**11.** Procédé selon la revendication précédente, **caractérisé en ce que** la durée dudit pas de temps d'échantillonnage est de l'ordre de quelques minutes.

**12.** Procédé selon l'une des revendications précédentes, **caractérisé en ce que** pour chaque streamer muni de moyens de mesure de traction, une mesure de traction est effectuée en tête de streamer.

**13.** Procédé selon l'une des revendications précédentes, **caractérisé en ce que** les données simulées de positionnement et de traction de streamer sont obtenues par un algorithme instationnaire de couplage hydrodynamique.

**14.** Procédé selon la revendication précédente, **caractérisé en ce que** ledit algorithme modélise chaque streamer par plusieurs tronçons rectilignes lorsque le navire se déplace selon une trajectoire sensiblement rectiligne, et par un nombre supérieur de segments lorsque le navire est en virage.

**15.** Procédé selon la revendication précédente, **caractérisé en ce que** ledit nombre supérieur de segments est de l'ordre de quinze.

**16.** Dispositif pour la mise en oeuvre du procédé selon l'une des revendications précédentes, **caractérisé en ce qu'**il comporte les moyens (50) d'acquisition de traction de streamer, des moyens (51) d'acquisition de positionnement de streamer, et des moyens (52) de traitement permettant la mise en oeuvre d'un algorithme pour déterminer à chaque pas de temps d'échantillonnage un vecteur courant représentatif du courant réel.

**Claims**

**1.** Method of determining ocean current implementing geophysical data acquisition means on board a ship (10), said ship towing at least one streamer (S1-S10) furnished with traction measurement means (50) and with positioning measurement means (51), **characterized in that** the method comprises the steps consisting in:

- collecting the measurements from said traction measurement means (50),
- collecting the measurements from said positioning measurement means (51),
- calculating in a reiterative manner a current vector representative of the real current by reiterating the following operations according to a given sampling time interval:

    ✓ calculating simulated streamer positioning and traction data for a plurality of simulation input current vectors,
    ✓ determining said current vector representative of the real current by comparing the measured and simulated values for the various simulation input current vectors.

**2.** Method according to the preceding claim, **characterized in that** the determination of said current vector representative of the real current implements the following operations for each sampling timestep:

    ✓ defining deviations of traction and of positioning between the data simulated with real measurements performed by said measurement means, for each simulation input current vector,
    ✓ determining said current vector representative of the real current by analysing said deviations of traction and of positioning.

**3.** Method according to Claim 1 or 2, **characterized in that** the step of calculating the current vector representative of the real current comprises the determination for each simulation input current vector of a relative deviation of traction, and of a relative deviation of positioning.

**4.** Method according to one of the preceding claims, **characterized in that** the determination of the current vector results from the minimizing of a function of the coordinates of the current vector.

**5.** Method according to the preceding claim, **characterized in that** to calculate the current vector representative of the real current, a function of the following general form is minimized:

$$f(\theta, v) = \frac{1}{T} \int_T \beta.( \text{(relative deviation of positioning)} + (1-\beta).\text{(relative deviation of traction)}$$

,β being a weighting coefficient, T being the duration of the sampling timestep, V being the modulus of the current vector and θ the orientation in the plane of the current vector.

6. Method according to the preceding claim, **characterized in that** the function to be minimized is a convex function.

7. Method according to the preceding claim, **characterized in that** the minimization of said function is performed by a gradient procedure.

8. Method according to one of \claims 4 to 7, **characterized in that** the function to be minimized is of the form:

$$F(Vx,Vy) = \frac{K1}{L.(T1-T0)} \quad x \quad \int_{T00}^{T1L} |Fmes(s,t) - Fsim(Vx,Vy,s,t)| \ dsdt$$

$$+ \frac{K2}{L.(T1-T0)} \quad x \quad \int_{T00}^{T1L} \sqrt{(Xmes(s,t) - Xsim(Vx,Vy,s,t))^2 + (Ymes(s,t) - Ysim(Vx,Vy,s,t))^2} \ dsdt$$

with the following notation:

Vx, Vy = components of the current to be determined,
Xmes(s,t), Ymes(s,t) = coordinates of the point with curvilinear abscissa s of the streamer measured at the instant t,
Xsim(Vx,Vy,s,t), Ysim(Vx,Vy,s,t) = coordinates of the point with curvilinear abscissa s of the streamer simulated at the instant t,
Fmes(s,t) = traction force measured at the curvilinear abscissa s and at the instant t,
Fsim(Vx,Vy,s,t) = traction force at the curvilinear abscissa s and at the instant t,
T0,T1 - respective instants of start and end of simulation,
L = length of streamer,
K1,K2 = weighting coefficients.

9. Method according to one of the preceding claims, **characterized in that** during the first calculation of simulated streamer traction and positioning data, the input current vector is the current vector which, for a time span given the previous time span, has provided the simulation of streamer traction and deformation curve closest to the measured traction and measured deformation curve during a previous simulation of deformation curve.

10. Method according to one of the preceding claims, **characterized in that** said sampling timestep is chosen in such a way as to be long enough to cover several acquisitions of positioning and traction measurements by said measurement means.

11. Method according to the preceding claim, **characterized in that** the duration of said sampling timestep is of the order of a few minutes.

12. Method according to one of the preceding claims, **characterized in that** for each streamer furnished with traction measurement means, a traction measurement is performed at the head of the streamer.

13. Method according to one of the preceding claims, **characterized in that** the simulated streamer positioning and traction data are obtained via an unsteady hydrodynamic coupling algorithm.

14. Method according to the preceding claim, **characterized in that** said algorithm models each streamer by several rectilinear pieces when the ship is moving along a substantially rectilinear trajectory, and by a greater number of segments when the ship is turning.

15. Method according to the preceding claim, **characterized in that** said greater number of segments is of the order of fifteen.

16. Device for the implementation of the method according to one of the preceding claims, **characterized in that** it comprises the streamer traction acquisition means (50), streamer positioning acquisition means (51), and processing means (52) allowing the implementation of an algorithm to determine at each sampling timestep a current vector representative of the real current.

**Patentansprüche**

1.  Verfahren zur Bestimmung von Meeresströmung, das Bordmittel einsetzt zur Erfassung geophysikalischer Daten auf einem Schiff (10), wobei das Schiff wenigstens einen Streamer (S1-S10) schleppt, der mit Mitteln zur Traktionsmessung (50) und mit Mitteln zur Positionsmessung (51) versehen ist, **dadurch gekennzeichnet, daß** das Verfahren folgende Schritte aufweist:

    - Erfassen der Meßwerte der Mittel zur Traktionsmessung (50),
    - Erfassen der Meßwerte der Mittel zur Positionsmessung (51),
    - auf iterative Weise einen den realen Strom repräsentierenden Stromvektor Berechnen, indem folgende Operationen gemäß eines gegebenen Zeitschritts des Datensamples reiteriert werden:

        ✓ Berechnen von simulierten Traktions- und Positionsdaten des Streamers für mehrere Simulationsausgangsstromvektoren,
        ✓ Bestimmen des den realen Strom repräsentierenden Stromvektors durch Vergleich der gemessenen und simulierten Werte für die verschiedenen Simulationsausgangsstromvektoren,

2.  Verfahren nach dem vorstehenden Anspruch, **dadurch gekennzeichnet, daß** bei der Bestimmung des den realen Strom repräsentierenden Stromvektors für jeden Zeitschritt des Datensamples folgende Operationen durchgeführt werden:

    ✓ Definieren, für jeden Simulationsausgangsstromvektor, von Traktions- und Positionsabständen zwischen den simulierten Daten und den realen Meßwerten, die von den Meßmitteln gewonnen wurden,
    ✓ Bestimmen des den realen Strom repräsentierenden Stromvektors durch Analyse der Traktions- und Positionsabstände.

3.  Verfahren nach Anspruch 1 oder 2, **dadurch gekennzeichnet, daß** der Schritt zur Berechnung des den realen Strom repräsentierenden Stromvektors für jeden Simulationsausgangsstromvektor die Bestimmung eines Traktionsrelativabstands und eines Positionsrelativabstands umfaßt.

4.  Verfahren nach einem der vorstehenden Ansprüche, **dadurch gekennzeichnet, daß** die Bestimmung des Stromvektors aus der Minimierung einer Funktion der Koordinaten des Stromvektors resultiert.

5.  Verfahren nach einem der vorstehenden Ansprüche, **dadurch gekennzeichnet, daß** zur Berechnung des den realen Strom repräsentierenden Stromvektors eine Funktion der allgemeinen Form:

$$f(\theta, v) = \frac{1}{T} \int_T \beta.(\text{Positionsrelativabstand}) + (1 - \beta).(\text{Traktionsrelativabstand})$$

minimiert wird, wobei $\beta$ ein Gewichtungskoeffizient, T die Dauer eines Zeitschritts des Datensamples, v der Betrag des Stromvektors und $\theta$ die Orientierung in der Ebene des Stromvektors ist.

6.  Verfahren nach einem der vorstehenden Ansprüche, **dadurch gekennzeichnet, daß** die Minimierungsfunktion eine konvexe Funktion ist.

7.  Verfahren nach einem der vorstehenden Ansprüche, **dadurch gekennzeichnet, daß** die Minimierung der Funktion mit einem Gradientenverfahren durchgeführt wird.

8.  Verfahren nach einem der vorstehenden Ansprüche, **dadurch gekennzeichnet, daß** die zu minimierende Funktion von der allgemeinen Form:

$$F(Vx,Vy) = \frac{K1}{L.(T1-T0)} \times \int_{T0}^{T1}\int_{0}^{L} \left| Fmes(s,t) - Fsim(Vx,Vy,s,t) \right| \, dsdt$$

$$+ \frac{K2}{L.(T1-T0)} \times \int_{T0}^{T1}\int_{0}^{L} \sqrt{(Xmes(s,t) - Xsim(Vx,Vy,s,t))^2 + (Ymes(s,t) - Ysim(Vx,Vy,s,t))^2} \; dsdt$$

ist, mit folgender Schreibweise:

Vx,Vy = Komponenten des zu bestimmenden Stroms,
Xmes(s,t), Ymes(s,t) = Koordinaten des zur Zeit t gemessenen Bogenlängenpunkts s des Streamers,
Xsim(Vx,Vy,s,t), Ysim(Vx,Vy,s,t) = Koordinaten des zur Zeit t simulierten Bogenlängenpunkts s des Streamers,
Fmes(s,t) = am Bogenlängenpunkt s und zur Zeit t gemessene Traktionskraft
Fsim(Vx,Vy,s,t) = Traktionskraft am Bogenlängenpunkt s und zum Zeitpunkt t,
T0,T1 = Start- bzw. Endzeitpunkt der Simulation,
L = Länge des Streamers,
K1, K2 = Gewichtungskoeffizienten.

9.  Verfahren nach einem der vorstehenden Ansprüche, **dadurch gekennzeichnet, daß** bei der ersten Berechnung der simulierten Traktions- und Positionsdaten des Streamers der Ausgangsstromvektor jener Stromvektor ist, der für ein bestimmtes Zeitintervall, das vorhergehende Zeitintervall, bei der vorhergehenden Deformierungssimulation die Simulation der Deformierung und der Traktion des Streamers geliefert hat, die der gemessenen Deformierung und Traktion am nächsten liegt.

10. Verfahren nach einem der vorstehenden Ansprüche, **dadurch gekennzeichnet, daß** der Zeitschritt des Datensamples so gewählt wird, daß er ausreichend lang ist, um mehrere Meßwerterfassungen des Traktions und der Position mittels der Meßmittel abzudecken.

11. Verfahren nach dem vorstehenden Anspruch, **dadurch gekennzeichnet, daß** die Zeitdauer des Zeitschritts des Datensamples in der Größenordnung von einigen Minuten liegt.

12. Verfahren nach einem der vorstehenden Ansprüchen, **dadurch gekennzeichnet, daß** für jeden mit Traktionsmeßmitteln versehenen Streamer, eine Traktionsmessung am Kopf des Streamers durchgeführt wird.

13. Verfahren nach einem der vorstehenden Ansprüche, **dadurch gekennzeichnet, daß** die simulierten Positions- und Traktionsdaten des Streamers mittels eines instationären Algorithmus hydrodynamischer Kopplung gewonnen werden.

14. Verfahren nach einem der vorstehenden Ansprüche, **dadurch gekennzeichnet, daß** der Algorithmus jeden Streamer durch mehrere geradlinige Abschnitte modelliert, wenn das Schiff sich entlang einer im wesentlichen geradlinigen Bahn bewegt, und durch eine größere Zahl an Segmenten, wenn das Schiff sich entlang einer Kurve bewegt.

15. Verfahren nach einem der vorstehenden Ansprüche, **dadurch gekennzeichnet, daß** die größere Zahl an Segmenten in der Größenordnung von 15 liegt.

16. Vorrichtung zur Durchführung eines Verfahrens nach einem der vorstehenden Ansprüche, **dadurch gekennzeichnet, daß** sie umfaßt : Mittel (50) zur Erfassung des Traktions des Streamers, Mittel (51) zur Erfassung der Position des Streamers, sowie Behandlungsmittel (52), welche die Durchführung eines Algorithmus zur Bestimmung eines den realen Strom repräsentierenden Stromvektors, zu jedem Zeitschritt des Datensamples, ermöglichen.

## FIG_1a

## FIG_1b

FIG.2

FIG.3

FIG_4a

FIG_4b

FIG_4c

FIG.5